# EUROPEAN PATENT SPECIFICATION

(11) **EP 2 536 244 B1**
(45) Date of publication and mention of the grant of the patent: **14.12.2016**
(21) Application number: 11771497.2
(22) Date of filing: 18.01.2011
(51) Int. Cl.: H04W 76/02, H04W 74/08

(54) **METHOD AND APPARATUS FOR TRIGGERING RADIO RESOURCE CONTROL CONNECTION RE-ESTABLISHMENT**
VERFAHREN UND VORRICHTUNG ZUM AUSLÖSEN DER NEUERSTELLUNG DER FUNKRESSOURCENSTEUERUNGSVERBINDUNG
PROCÉDÉ ET APPAREIL DE DÉCLENCHEMENT DE RÉTABLISSEMENT DE CONNEXION DE GESTION DES RESSOURCES RADIO

(30) Priority: 23.04.2010 CN 201010156881
(43) Date of publication of application: 19.12.2012
(73) Proprietor: ZTE Corporation, Shenzhen, Guangdong 518057 (CN)
(72) Inventor: ZHANG, Jian, Shenzhen Guangdong 518057 (CN); HUANG, Yada, Shenzhen Guangdong 518057 (CN)
(74) Representative: Lavoix
(86) International application number: PCT/CN2011/070367
(87) International publication number: WO 2011/131044

(56) References cited:
- CN-A- 101 409 606
- CN-A- 101 651 899
- CN-A- 101 754 414
- ZTE: "Discussion on UL RLF for CA", 3GPP DRAFT; R2-102175-UL RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 6 April 2010 (2010-04-06), XP050422585, [retrieved on 2010-04-06]
- ZTE: "RLF and Re-establishment in carrier aggregation", 3GPP DRAFT; R2-095669 RLF AND RE-ESTABLISHMENT IN CARRIER AGGREGATION, no. Miyazaki; 20091012, 3 October 2009 (2009-10-03), XP050390181, [retrieved on 2009-10-03]
- INTERDIGITAL: "RACH with Carrier Aggregation", 3GPP DRAFT; R2-102132 (RACH IN CA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 6 April 2010 (2010-04-06), XP050422566, [retrieved on 2010-04-06]
- QUALCOMM EUROPE: "RACH monitoring by RRC", 3GPP DRAFT; R2-082495 RACH MONITORING BY RRC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), XP050140177, [retrieved on 2008-04-29]
- "UL CC selection for RACH", 3GPP DRAFT; R2-101039, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 16 February 2010 (2010-02-16), XP050421735, [retrieved on 2010-02-16]
- 'Evolved Universal Terrestrial Radio Access (E-UTRA) Radio Resource Control (RRC). Protocol specification (Release 8).' 3GPP TS 36.331 V8.0.0 31 December 2007, pages 22 - 23, XP008159515

## Description

### TECHNICAL FIELD

The disclosure relates to a random access technology, in particular to a method and device for triggering Radio Resource Control (RRC) connection re-establishment.

### BACKGROUND

In a Long Term Evolution (LTE) wireless system of Third Generation Partnership Project (3GPP), a User Equipment (UE) in RRC_CONNECTED state needs to trigger random access procedure to acquire uplink synchronization with a network side, i.e., an Evolved Universal Terrestrial Radio Access Network (E-UTRAN) which is also called an Enhanced NodeB (eNB) when the following five events occur. The five events are specifically: RRC connection re-establishment procedure; handover; the arrival of downlink data in the RRC_CONNECTED state needs the random access procedure, for example, when uplink synchronization state is "non-synchronized"; the arrival of the uplink data in the RRC_CONNECTED state needs the random access procedure, for example, when uplink synchronization state is "non-synchronized"; or there is no available Physical Uplink Control Channel (PUCCH) resource for the transmission of a Schedule Request (SR); and the location destination in the RRC connection state needs the random access procedure, for example, the location of UE needs timing advance. The random access procedure is divided into a competition-based random access procedure and a non-competition-based random access procedure. The random access procedure triggered by the five events above can be the competition-based one; and the random access procedure triggered by the events of handover, the arrival of downlink data and the location can be the non-competition-based random access procedure. The random access procedure can be initiated by the PDCCH order or the Medium Access Control (MAC) layer of UE; optionally, a PDCCH order or a RRC signaling can allocate dedicated random access preamble for the UE and the random access procedure is non-competition-based, otherwise, the UE needs to select the random access preamble, and the random access procedure is competition-based. The UE selects random access resources, including selecting the random access preamble, the time-frequency resources of Physical Random Access Channel (PRACH) and the like. The random access procedure cannot succeed until being performed for one or more times, or still not succeed even being performed for the maximum times. The eNB configures the random access preamble transmission maximum times (preambleTransMax) parameter for the UE in advance by system information 2 (SIB2).The counter preamble_transmission_counter of random access preamble sent by UE is initialized to be 1; the counter adds 1 every time the random access procedure is judged to be failed; and when the counter is preambleTransMax+1, it is indicated that the failure times of the random access procedure reaches maximum times, and MAC layer indicates the random access problem of an upper protocol layer, such as an RRC layer. After the RRC layer of the UE receives the indication from the MAC layer, if timers T300, T301, T304, and T311 are not running, Radio Link Failure (RLF) is considered to be detected; and the RRC connection re-establishment procedure is triggered when the security of an Access Stratum (AS) has been activated. The starting and stopping conditions of the timers are listed in tables of the 7.3 section of the 3GPP protocol specification TS36.331. When an UE in an RRC idle state (RRC_IDLE) initially accesses a network, T300 is configured to start at the time of sending an RRC connection request message RRCConnectionReestabilshmentRequest.T301 starts when a UE sends an RRC connection re-establishment request message RRCConnectionReestabilshmentRequest and stops when the UE receives an RRC connection re-establishment message RRCConnectionReestablishment or an RRC connection re-establishment rejection message RRCConnectionReestablishmentReject or a selected cell becomes unsuitable.T304 starts when the UE sends an RRC connection reconfiguration message RRCConnectionReconfiguration including a mobility control information message MobilityControl Info or receives a mobility command MobilityFromEUTRACommand message from an Evolved Universal Mobile Telecommunication System (UMTS) Terrestrial Radio Access (EUTRA) including a cell change order CellChangeOrder, and stops when switching to the EUTRA is successfully completed or a change order of a cell is met.T311 starts when the RRC connection re-establishment is initiated and stops when a proper E-UTRA cell is selected or other Radio Access Technology (RAT) is used.

3GPP document R2-102175 entitled "Discussion on UL RLF for CA" discusses when the UE shall indicate RACH access problem. 3GPP document R2-095669 entitled "RLF and Re-established in carrier aggregation" discusses the detection of ratio link failure and the trigger of RRC connection re-established in carrier aggregation. 3GPP document R2-102132 entitled "RACH with Carrier Aggregation" discusses the LTE Rel-10 UE behavior for RACH when the UE is configured to operate with carrier aggregation with focus on how the UE handles multiple RACH resources and UL RACH failure. And 3GPP document R2-082495 entitled "RACH monitoring by RRC" provides methods to monitor RACH for the various RACH use cases.A Carrier Aggregation (CA) technology is adopted in Long Term Evolution Advanced (LTE-A) system in order to provide higher data rate for mobile subscriber. The maximum transmission bandwidths of the LTE system in downlink and uplink are 20MHz, and the CA of the LTE-A system aggregates two or more component carriers (CCs) in downlink and/or uplink to support transmission bandwidths over 20MHz. The LTE-A system of 3GPP Rel-10 has a maximum transmission bandwidths of less than 100MHz in downlink and uplink and supports the aggregation of up to 5 CCs respectively in downlink and uplink .The LTE-A UE with the CA capability can transceive data on multiple CCs simultaneously, and in this application, the following UEs are this kind of UEs unless otherwise specified. The UE is provided with a downlink primary component carrier (DL PCC) and an uplink primary component carrier (UL PCC) and can be provided with 0 to 4 downlink secondary component carriers (DL SCCs) and/or 0 to 4 uplink secondary component carriers (UL SCCs), and the total number of UL CCs is less than or equal to that of the DL CCs. The UL CC at least has one associated DL CC in intra-band, and the association relationship between uplink and downlink carriers is configured by system information broadcast (SIB2) or dedicated signaling, such as RRC signaling. When the DL PCC is the CC when the UE initially accesses to eNB, the UE can change the DL PCC into other DL CC by RRC connection reconfiguration when the UE is in the RRC_CONNECTED state. The UL PCC also can be reconfigured into other UL CC by SIB2 or dedicated signaling, such as RRC signaling. At any time, the UE in RRC_CONNECTED state at least remains the configuration of one DL PCC and one UL PCC. When detecting RLF, the DL PCC will trigger RRC connection re-establishment procedure, and the RLF of the DL SCC does not trigger such procedure. The UL PCC is provided with PUCCH resources for sending signaling like Hybrid Automatic Repeat Request Acknowledgement/Negative Acknowledgement (HARQ ACK/NACK), SR, Periodic Channel Quality Indicator (CQI) and the like.

In LTE-A Rel-10 CA, all the CCs are backward compatible. From the point of view of cell or eNB, each UL CC is provided with a random access channel (RACH) resource. From the point of view of UE, in the configured UL CC, the RACH resources on some UL CCs may not be configured for the UE to use, so certain UE may select available RACH resources from part of configured UL CCs thereof. The UE can initiate the random access procedure on more than one UL CC, and the random access procedure is only one at any time and can be performed in series on multiple CCs respectively or in parallel on multiple UL CCs. When the LTE-A system only supports a single TA, the random access procedure only needs to be performed on one UL CC at any time, and the random access procedure may be initiated on other UL CCs by selecting only when the random access procedure on certain UL CC is failed. In case of supporting multiple TAs, the random access procedure can be performed in series on multiple UL CCs respectively, and the random access procedure may also be initiated on other UL CCs even random accesses successfully on one UL CC; or the random access procedure can be performed in parallel on multiple UL CCs. As a result, in the LTE-A, when the failure times of random access procedure on one UL CC reaches the maximum times preambleTransMax, it does not necessarily mean RLF and the initiation of RRC connection re-establishment. The UE selects to initiate the random access only on the UL PCC, and if the failure times of random access reaches the maximum times, the MAC layer indicates the random access problem on the RRC layer; or the UE selects to initiate the random access on any UL CC, and if the failure times of the random access reaches the maximum times, the MAC layer indicates the random access problem on the RRC layer; and the two methods above are consistent with corresponding method in the LTE system. Or, if the failure times of random access of the UE on certain UL CC reaches the maximum times, and then the UE tries to initiate the random access on other UL CCs until the failure times of the random access on all the UL CCs reaches the maximum times, the MAC layer indicates the random access problem on the RRC layer. This method does not take the radio condition of UL CC, configuration of RACH resources, delay, selection method of UL CC, the repeated selection performance of certain UL CC and the like into consideration.

### SUMMARY

In view of this, the main objective of the disclosure is to provide a method and device for triggering RRC connection re-establishment, which can improve the recovery efficiency of a radio link.

The features of the method and device according to the present invention are defined in the independent claims, and the preferable features according to the present invention are defined in the dependent claims.

In the disclosure, by resetting the way of triggering the RRC connection re-establishment under the condition of failure radio access procedure, and on the premise of being compatible with the existing way of triggering the RRC connection re-establishment, the delay of the RRC connection re-establishment of the UE is greatly reduced and the radio link can be recovered as fast as possible. Specifically, the technical solution of the disclosure is easy and feasible, and has the advantages of high inheritance of the related art, small delay, fast recovery of radio link and the like.

### BRIEF DESCRIPTION OF THE DRAWINGS

Fig. 1 is a flowchart of a method for triggering RRC connection re-establishment in the first embodiment of the disclosure;
Fig. 2 is a flowchart of a method for triggering RRC connection re-establishment in the second embodiment of the disclosure;
Fig. 3 is a flowchart of a method for triggering RRC connection re-establishment in the third embodiment of the disclosure; and
Fig. 4 is a diagram showing the composition structure of a device for triggering RRC connection re-establishment in the disclosure.

### DETAILED DESCRIPTION

To make the objective, technical solution and advantages of the disclosure clearer, the disclosure is further described below with reference to embodiments and drawings in detail.

### First embodiment

In the embodiment, whether the random access procedure initiated on the MAC layer of the UE is successful or not is determined by judging whether the random access procedure initiated on a UL PCC is successful; when the random access procedure initiated by the UE is failed, the random access problem of the upper protocol layer, such as the RRC layer, is indicated; and the upper protocol layer, such as the RRC layer, triggers the RRC connection re-establishment procedure, which is described below in detail.

It is assumed that the UE selects to initiate the random access procedure on a UL SCC firstly, if the failure times of the random access procedure reaches the maximum times preambleTransMax, then the random access procedure is selected to be initiated on a UL PCC; if the failure times of the random access procedure reaches the maximum times preambleTransMax, the MAC layer indicates the random access problem of an upper protocol layer, such as the RRC layer; and here, the preambleTransMax is a set value in related protocols. When there are more than two UL SCCs, it is able to directly select to initiate the random access procedure on a UL PCC after the random access procedure initiated on one UL SCC is failed, or select to continuously initiate the random access procedure on the rest UL SCC, the specific selection way is configured in the UE. While selecting the UL SCC, one UL SCC cannot be selected twice before the selection of the UL PCC.

The RRC layer receives the indication from the MAC layer, considers it to be RLF and triggers the RRC connection re-establishment procedure.

It is assumed that the UE selects to initiate the random access procedure on a UL PCC firstly, if the failure times of the random access procedure reaches the maximum times preambleTransMax, the MAC layer indicates the random access problem of the upper protocol layer, such as the RRC layer; and
the RRC layer receives the indication from the MAC layer, considers it to be RLF and triggers the RRC connection re-establishment procedure.

Or, under two conditions above, the RRC layer receives the random access problem indicated by the MAC layer, considers it to be RLF when timers are not running and triggers the RRC connection re-establishment procedure. The timer is T301 and T311 under the condition of the random access procedure triggered by RRC connection re-establishment event, and is T304 under the condition of the random access procedure triggered by handover event; the defining, starting and stopping of the timers T301, T311 and T304 are completely the same as that in the related art and are stipulated in the related protocols, thereby needing no further description.

Or, the timer is a newly-defined timer Tx under the condition of the random access procedure triggered by the event that the arrival of downlink data needs the random access procedure, and is a newly-defined timer Ty under the condition of the random access procedure triggered by the event that the arrival of uplink data needs the random access procedure, and is a newly-defined timer Tz under the condition of the random access procedure triggered by the event that the location of the UE needs the random access procedure. The timers Tx, Ty, and Tz are started when the UE initiates the random access procedure on the UL CC which selected firstly. The timers Tx, Ty, and Tz can also be the same timer. After the timers expire, the RRC connection re-establishment procedure is triggered.

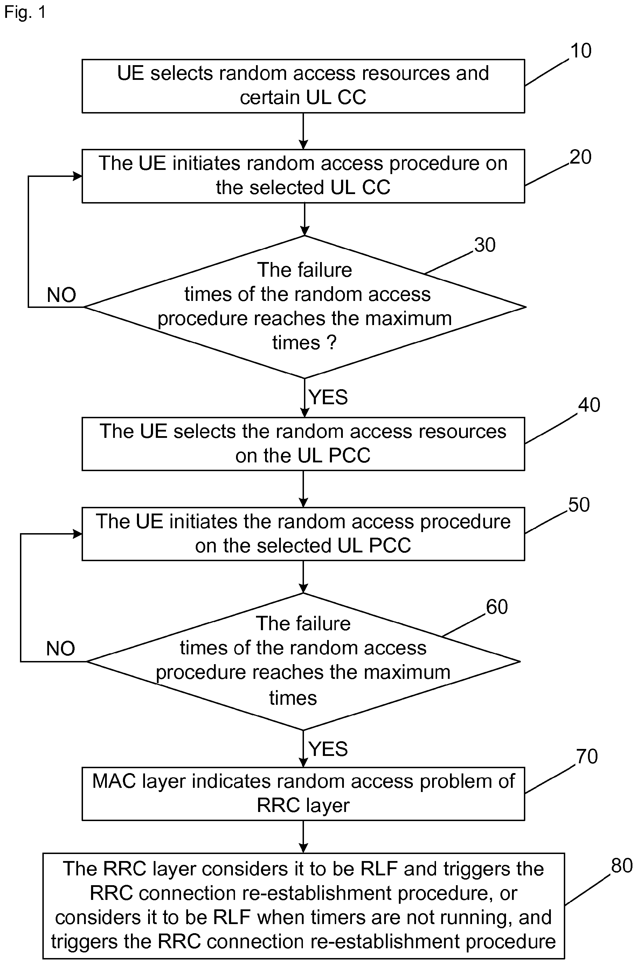

Fig. 1 is a flowchart of a method for triggering RRC connection re-establishment in the first embodiment of the disclosure, as shown in Fig. 1, the method for triggering RRC connection re-establishment in the embodiment includes following steps:
Step 10: The UE selects random access resources and certain UL CC; and the selection way is as what mentioned above.

Specifically, the principle for selecting the UL CC is:
the UE selects a UL CC to execute the random access procedure based on at least one of the following conditions:
   based on the path loss of the DL CC associated with the UL CC ( for example, selecting the UL CC whose associated DL CC has the minimum path loss), based on the path loss of the UL CC ( for example, selecting the UL CC having the minimum path loss), based on the path loss of the DL CC which is associated with the UL CC and has the same frequency band with that of the UL CC ( for example, selecting the UL CC whose associated DL CC has the same frequency band with that of the UL CC and has the minimum path loss), based on the Power Headroom Report (PHR) of the UE on the UL CC ( for example, selecting the UL CC having the maximum PHR), based on the time-frequency domain configuration of random access resources (for example selecting the UL CC which is nearest to the random access channel), random selection and the like.

Step 20: The UE initiates the random access procedure on the selected UL CC.

Step 30: Whether the failure times of the random access procedure reaches the maximum times is judged, if not, Step 20 is executed, otherwise, Step 40 is executed.

Step 40: The UE selects the random access resources (i.e., RACH) on the UL PCC.

Step 50: The UE initiates the random access procedure on the selected UL PCC.

Step 60: Whether the failure times of the random access procedure reaches the maximum times is judged, if not, Step 50 is executed, otherwise, Step 70 is executed.

Step 70: The MAC layer indicates the random access problem of the RRC layer.

Step 80: The RRC layer considers it to be RLF and triggers the RRC connection re-establishment procedure. Or, the RRC layer further determines whether it is RLF according to the running conditions of the related timers mentioned above in the embodiment and triggers the RRC connection re-establishment procedure.

### Second embodiment

In the embodiment, the RRC connection re-establishment procedure is triggered according to the failed random access procedure initiated on all the UL CCs, which is described below in detail.

The UE selects to initiate the random access procedure on certain UL CC, if the failure times of the random access procedure initiated on the UL CC reaches the maximum times preambleTransMax, then the random access procedure on another UL CC is selected to be initiated, and deducing the rest; if the failure times of the random access procedure initiated by the UE on each configured UL CC reaches the maximum times preambleTransMax, the MAC layer indicates the random access problem of the upper protocol layer, such as the RRC layer.

The UL CC configured by the UE refers to all the UL CCs that provided with random access resources for the UE or the subset of all the UL CCs or UL CCs preset with corresponding number; and the subset or number of the UL CCs is pre-configured to the UE. The subset contains UL PCCs and UL SCCs or only contains UL SCCS. The UL CCs preset with corresponding number contain UL PCCs and UL SCCs or only contain UL SCCs.

The RRC layer receives the indication from the MAC layer, considers it to be RLF and triggers the RRC connection re-establishment procedure.

In the embodiment, while initiating the random access procedure on each configured UL CC, the UE cannot repeatedly select the UL CCs on which the failure times of the random access procedure has reached the maximum times preambleTransMax; or, cannot repeatedly select the UL CCs on which the failure times of the random access procedure has reached the maximum times within a preset time range. Specifically, the UE records the selected times of each UL CC by a counter; each UL CC is provided with a corresponding counter whose initial value is 0; when the failure times of the random access procedure initiated by the UE on certain UL CC reaches the maximum times preambleTransMax, the value of the corresponding counter adds 1; when the value of the corresponding counter is 1, the corresponding UL CC cannot be selected for the initiation of the random access procedure. The counter is re-initialized after the triggering of the RRC connection re-establishment.

Or, the RRC layer receives the random access problem indicated by the MAC layer, considers it to be RLF when timers are not running and triggers the RRC connection re-establishment procedure. The timer is T301 and T311 under the condition of the random access procedure triggered by RRC connection re-establishment event, and is T304 under the condition of the random access procedure triggered by handover event; the defining, starting and stopping of the timers T301, T311 and T304 are completely the same as that in the related art and are stipulated in the related protocols, thereby needing no further description.

Or, the timer is a newly-defined timer Tx under the condition of the random access procedure triggered by the event that the arrival of downlink data needs the random access procedure, and is a newly-defined timer Ty under the condition of the random access procedure triggered by the event that the arrival of uplink data needs the random access procedure, and is a newly-defined timer Tz under the condition of the random access procedure triggered by the event that the location of the UE needs the random access procedure. The timers Tx, Ty, and Tz are started when the UE initiates the random access procedure on the UL CC which selected firstly. The timers Tx, Ty, and Tz can also be the same timer. After the timers expire, the RRC connection re-establishment procedure is triggered.

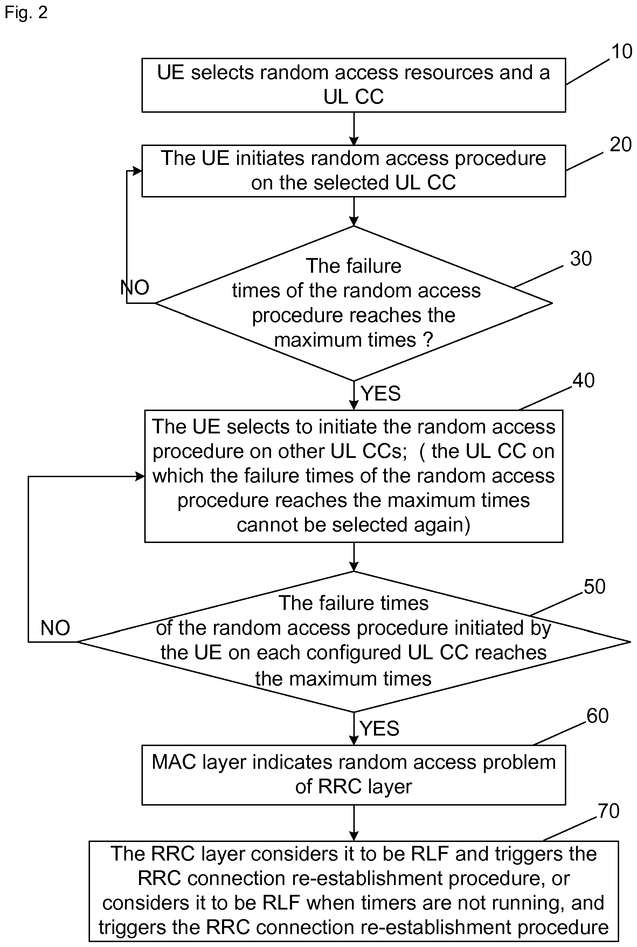

Fig. 2 is a flowchart of a method for triggering RRC connection re-establishment in the second embodiment of the disclosure, as shown in Fig. 2, the method for triggering RRC connection re-establishment in the embodiment includes following steps:
Step 10: The UE selects random access resources and certain UL CC.
Step 20: The UE initiates the random access procedure on the selected UL CC.
Step 30: Whether the failure times of the random access procedure reaches the maximum times is judged, if not, Step 20 is executed, otherwise, Step 40 is executed.
Step 40: The UE selects to initiate the random access procedure on other UL CCs; (the UL CC on which the failure times of the random access procedure reaches the maximum times cannot be selected again).
Step 50: Whether the failure times of the random access procedure reaches the maximum times is judged, if not, Step 40 is executed, otherwise, Step 60 is executed.
Step 60: The MAC layer indicates the random access problem of the RRC layer.
Step 70: The RRC layer considers it to be RLF and triggers the RRC connection re-establishment procedure. Or, the RRC layer further determines whether it is RLF according to the running conditions of the related timers as mentioned above in the embodiment, and triggers the RRC connection re-establishment procedure.

### Third embodiment

When the failure times of the random access procedure initiated by the UE on specific UL CCs reaches the maximum times preambleTransMax, the MAC layer indicates the random access problem of the upper protocol layer, such as the RRC layer; the specific UL CCs can be UL PCCs or UL CCs meeting preset condition; and the UE prefers to select to initiate the random access procedure on the specific UL CCs.

The specific UL CCs are the ones with the best radio channel condition, or the ones whose associated DL CCs have the minimum path loss, or
the ones whose associated DL CCs have the same frequency band with that of the UL CCs and the minimum path loss, or
the ones having the minimum path loss, or
the ones having the maximum PHR, or,
the ones nearest to the RACH resources in time domain.
the RRC layer receives the indication from the MAC layer, considers it to be RLF and triggers the RRC connection re-establishment procedure.

Or, under two conditions above, the RRC layer receives the random access problem indicated by the MAC layer, considers it to be RLF when timers are not running and triggers the RRC connection re-establishment procedure. The timer is T301 and T311 under the condition of the random access procedure triggered by RRC connection re-establishment event, and is T304 under the condition of the random access procedure triggered by handover event; the defining, starting and stopping of the timers T301, T311 and T304 are completely the same as that in the related art and are stipulated in the related protocols, thereby needing no further description.

Or, the timer is a newly-defined timer Tx under the condition of the random access procedure triggered by the event that the arrival of downlink data needs the random access procedure, and is a newly-defined timer Ty under the condition of the random access procedure triggered by the event that the arrival of uplink data needs the random access procedure, and is a newly-defined timer Tz under the condition of the random access procedure triggered by the event that the location of the UE needs the random access procedure. The timers Tx, Ty, and Tz are started when the UE initiates the random access procedure on the UL CC which selected firstly. The timers Tx, Ty, and Tz can also be the same timer. After the timers expire, the RRC connection re-establishment procedure is triggered.

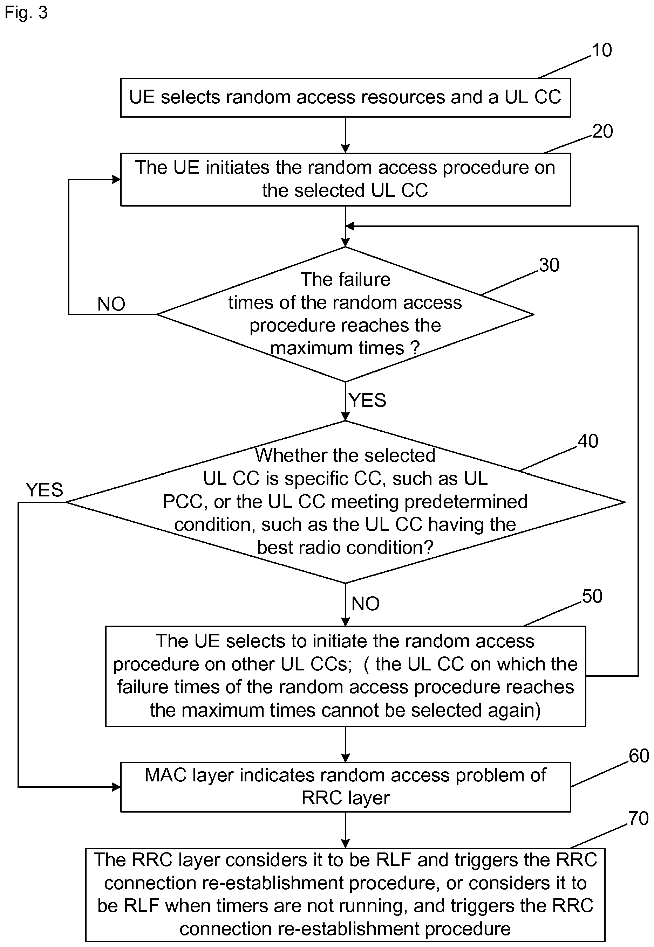

Fig. 3 is a flowchart of a method for triggering RRC connection re-establishment in the third embodiment of the disclosure, as shown in Fig. 3, the method for triggering RRC connection re-establishment in the embodiment includes following steps:
Step 10: The UE selects random access resources and a UL CC.
Step 20: The UE initiates the random access procedure on the selected UL CC.
Step 30: Whether the failure times of the random access procedure reaches the maximum times is judged, if not, Step 20 is executed, otherwise, Step 40 is executed.
Step 40: Whether the selected UL CC is a specific UL CC is judged, if not, Step 50 is executed, otherwise, Step 60 is executed.
Step 50: The UE selects to initiate the random access procedure on other UL CCs; (the UL CC on which the failure times of the random access procedure reaches the maximum times cannot be selected again), turning to Step 30.
Step 60: The MAC layer indicates the random access problem of the RRC layer.
Step 70: The RRC layer considers it to be RLF and triggers the RRC connection re-establishment procedure. Or, the RRC layer considers it to be RLF when the timers are not running and triggers the RRC connection re-establishment procedure.

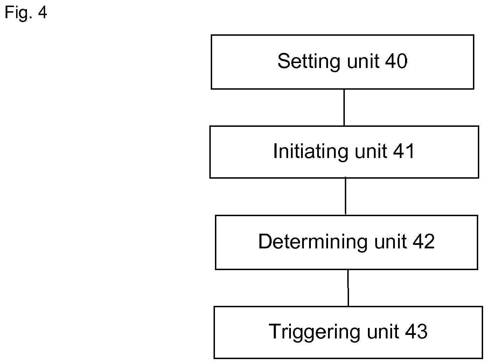

Fig. 4 is a diagram showing the composition structure of a device for triggering RRC connection re-establishment, as shown in Fig. 4, the device for triggering RRC connection re-establishment includes a setting unit 40, an initiating unit 41, a determining unit 42 and a triggering unit 43, wherein
the setting unit 40 is configured to set a random access policy for a UE;
the initiating unit 41 is configured to initiate random access procedure according to the set random access policy;
the determining unit 42 is configured to determine whether the random access procedure initiated by the initiating unit 41 is successful, and triggering the triggering unit if the random access procedure is failed; and
the triggering unit 43 is configured to triggering RRC connection re-establishment procedure.

The random access policy is: the UE initiates random access on the set UL CCs.

Preferably, the set UL CCs include a UL PCC and at least one UL SCC; and the determining unit 42 further determines: initiating the random access procedure on the UL PCC when the initiating unit 41 firstly initiates the random access procedure on the UL SCCs and the random access procedure initiated on at least one of the UL SCCs is failed, and determining the random access procedure initiated on the set UL CC is failed when the random access procedure initiated on the UL PCC is failed.

Preferably, the set UL CCs are UL PCCs; and
the determining unit 42 further determines: the random access procedure initiated on the set UL CCs is failed when the initiating unit 41 firstly initiates the random access procedure on the UL PCCs and the random access procedure initiated on the UL PCCs is failed.

The set UL CCs are specific UL CCs; and
the determining unit 42 further determines: the random access procedure initiated on the set UL CCs is failed when the random access procedure initiated by the initiating unit 41 on the specific UL CCs is failed.

The specific UL CCs are the ones with the best radio channel condition; or
the ones whose associated DL CCs have the minimum path loss, or
the ones whose associated DL CCs have the same frequency band with that of the UL CCs and the minimum path loss, or
the ones having the minimum path loss, or
the ones having the maximum PHR, or,
the ones nearest to the RACH resources in time domain.

Or, the random access policy is: a maximum number of UL CCs for the initiation of random access attempt are set for the UE; and
the determining unit 42 further determines: the initiated random access procedure is failed when the initiating unit 41 initiates the random access procedure on the selected UL CCs and the random access procedure is failed while the amount of the selected UL CCs reaches set maximum amount.

Or, the random access policy is: the set of UL CCs for the initiation of random access is set for the UE; and
the determining unit 42 further determines: the initiated random access procedure is failed when the random access procedure initiated by the initiating unit 41 on all the UL CCs in the set of UL CCs is failed.

Those skilled in the art should understand that the device for triggering RRC connection re-establishment in Fig. 4 is designed for implementing the above-mentioned method for triggering RRC connection re-establishment; and the implementing function of each processing unit in Fig. 4 can be understood with reference to the related description of the method. The function of each processing unit of the system in Fig. 4 can be realized by program running on a processor and can also be realized by a specific logic circuit.

## Claims

1. A method for triggering Radio Resource Control, RRC connection re-establishment, comprising
indicating (60), by an Medium Access Control, MAC layer, a random access problem of an RRC layer, upon determining that a random access procedure initiated by User Equipment, UE, according to a random access policy is failed;
receiving, by the RRC layer, an indication of the MAC layer;
determining, by the RRC layer, whether corresponding timers are running and considering the indication to be Radio Link Failure, RLF, when the corresponding timers are not running; and
triggering an RRC connection re-establishment procedure,
wherein the step of determining that the random access procedure is failed comprises:
determining (60) that the number of random access preamble transmission failure times on a Uplink Primary Component Carrier, UL PCC, reaches a preset maximum number of random access preamble transmission times; or
determining (50) that the number of random access preamble transmission failure times on each Uplink Component Carrier, UL CC, reaches the preset maximum number of random access preamble transmission times; and
wherein the step of determining, by the RRC layer, whether corresponding timers are running comprises:
setting a timer Tx under a condition of the random access procedure triggered by an arrival of downlink data, a timer Ty under a condition of the random access procedure triggered by an arrival of uplink data, and a timer Tz under a condition of the random access procedure triggered by timing advance determination for locating the UE, wherein the timers Tx, Ty and Tz are started when the UE initiates the random access procedure on an UL CC which is selected firstly; the corresponding timers are at least one of the Tx, Ty and Tz; and
before triggering the RRC connection re-establishment procedure, the method further comprises: determining whether at least one of the timers Tx, Ty and Tz expires; and triggering the RRC connection re-establishment procedure if the at least one of the timers Tx, Ty and Tz expires.

2. The method according to claim 1, further comprising:
before determining (60) that the number of the random access preamble transmission failure times on the UL PCC reaches the preset maximum number of random access preamble transmission times, determining (20) that the number of the random access preamble transmission failure times on a Uplink Secondary Component Carrier, UL SCC, reaches the preset maximum number of random access preamble transmission times.

3. The method according to claim 1, wherein the corresponding timers further comprise T301, T311, and T304; and the step of determining whether the corresponding timers are running further comprises:
determining whether T301 and/or T311 is running under a condition of the random access procedure triggered by RRC connection re-establishment event; and
determining whether T304 is running under a condition of the random access procedure triggered by handover event.

4. A device for triggering Radio Resource Control, RRC connection re-establishment, comprising an initiating unit (41), a determining unit (42) and a triggering unit (43), wherein
the initiating unit (41) is configured to initiate a random access procedure according to a random access policy;
the determining unit (42) is configured to determine whether the random access procedure initiated by the initiating unit (41) is successful, and trigger the triggering unit (43) if not; and
the triggering unit (43) is configured to trigger an RRC connection re-establishment procedure, wherein the triggering unit (43) is configured to trigger the RRC connection re-establishment procedure in the case that an MAC layer indicates a random access problem of an RRC layer, and the RRC layer receives the random access problem indication of the RRC layer,
and the RRC layer considers the indication to be Radio Link Failure when determining that corresponding timers are not running; wherein the determining unit (42) is configured to determine that the random access procedure is failed in the case that the number of a random access preamble transmission failure times on a Uplink Primary Component Carrier, UL PCC, reaches a preset maximum number of random access preamble transmission times, or in the case that the number of random access preamble transmission failure times on each Uplink Component Carrier, UL CC, reaches the preset maximum number of random access preamble transmission times; and the device further comprises: a setting unit configured to set a timer Tx under a condition of the random access procedure triggered by an arrival of downlink data, a timer Ty under a condition of the random access procedure triggered by an arrival of uplink data, and a timer Tz under a condition of the random access procedure triggered by timing advance determination for locating the UE, wherein the timers Tx, Ty and Tz are started when the UE initiates the random access procedure on an UL CC which is selected firstly; the corresponding timers are at least one of the Tx, Ty and Tz; and before the triggering unit (43) triggers the RRC connection re-establishment procedure, the determining unit (42) is configured to determine whether at least one of the Tx, Ty and Tz expires and then the trigger unit (43) is configured to trigger the RRC connection re-establishment procedure if the at least one of the Tx, Ty and Tz expires.

## Patentansprüche

1. Verfahren zum Auslösen einer Wiederherstellung einer Radio-Resource-Control-(RRC-)Verbindung, umfassend
Anzeigen (60) eines Direktzugriffsproblems einer RRC-Schicht durch eine Medienzugriffssteuerungsschicht (Medium Access Control, MAC-Schicht) nach dem Bestimmen, dass ein von einem Endgerät (User Equipment, UE) initiierter Direktzugriffsvorgang gemäß einer Direktzugriffsrichtlinie fehlgeschlagen ist,
Empfangen einer Anzeige der MAC-Schicht durch die RRC-Schicht,
Bestimmen durch die RRC-Schicht, ob entsprechende Zeitgeber laufen, und Beurteilen der Anzeige als Funkverbindungsstreckenausfall (Radio Link Failure, RLF), wenn die entsprechenden Zeitgeber nicht laufen, und
Auslösen eines Vorgangs zur Wiederherstellung der RRC-Verbindung,
wobei der Schritt des Bestimmens, dass der Direktzugriffsvorgang fehlgeschlagen ist, umfasst:
Bestimmen (60), dass die Anzahl von Direktzugriffspräambel-Übertragungsausfällen auf einem Aufwärts-Primärkomponententräger (Uplink Primary Component Carrier, UL PCC) eine voreingestellte maximale Anzahl von Direktzugriffspräambel-Übertragungen erreicht, oder
Bestimmen (50), dass die Anzahl von Direktzugriffspräambel-Übertragungsausfällen auf jedem Aufwärts-Komponententräger (Uplink Component Carrier, UL CC) die voreingestellte maximale Anzahl von Direktzugriffspräambel-Übertragungen erreicht, und
wobei der Schritt des Bestimmens durch die RRC-Schicht, ob entsprechende Zeitgeber laufen, umfasst:
Einstellen eines Zeitgebers Tx unter einer Bedingung, dass der Direktzugriffsvorgang durch ein Eintreffen von Abwärts-Daten (Downlink-Daten) ausgelöst wird, eines Zeitgebers Ty unter der Bedingung, dass der Direktzugriffsvorgang durch ein Eintreffen von Aufwärts-Daten (Uplink-Daten) ausgelöst wird, und eines Zeitgebers Tz unter einer Bedingung, dass der Direktzugriffsvorgang durch eine Timing-Advance-Bestimmung zum Lokalisieren des UE ausgelöst wird, wobei die Zeitgeber Tx, Ty und Tz gestartet werden, wenn das UE den Direktzugriffsvorgang auf einem UL CC, der zuerst ausgewählt wird, initiiert, wobei die entsprechenden Zeitgeber mindestens einer von Tx. Ty und Tz sind, und
das Verfahren vor dem Auslösen des Vorgangs zur Wiederherstellung der RRC-Verbindung ferner umfasst: Bestimmen, ob mindestens einer der Zeitgeber Tx, Ty und Tz abläuft, und Auslösen des Vorgangs zur Wiederherstellung der RRC-Verbindung, wenn der mindestens eine der Zeitgeber Tx, Ty und Tz abläuft.

2. Verfahren nach Anspruch 1, ferner umfassend:
vor dem Bestimmen (60), dass die Anzahl von Direktzugriffspräambel-Übertragungsausfällen auf dem UL PCC die voreingestellte maximale Anzahl von Direktzugriffspräambel-Übertragungen erreicht, Bestimmen (20), dass die Anzahl von Direktzugriffspräambel-Übertragungsausfällen auf einem Aufwärts-Sekundärkomponententräger (Uplink Secondary Component Carrier, UL SCC) die voreingestellte maximale Anzahl von Direktzugriffspräambel-Übertragungen erreicht.

3. Verfahren nach Anspruch 1, wobei die entsprechenden Zeitgeber ferner T301, T311 und T304 umfassen und
der Schritt des Bestimmens, ob die entsprechenden Zeitgeber laufen, ferner umfasst:
Bestimmen, ob T301 und/oder T311 unter einer Bedingung laufen, dass der Direktzugriffsvorgang vom Ereignis der Wiederherstellung der RRC-Verbindung ausgelöst wird, und Bestimmen, ob T304 unter einer Bedingung läuft, dass der Direktzugriffsvorgang von einem Übergabeereignis (Handover-Ereignis) ausgelöst wird.

4. Vorrichtung zum Auslösen einer Wiederherstellung einer Radio-Resource-Control-(RRC-)Verbindung, umfassend eine Initiierungseinheit (41), eine Bestimmungseinheit (42) und eine Auslösungseinheit (43), wobei
die Initiierungseinheit (41) dafür konfiguriert ist, einen Direktzugriffsvorgang gemäß einer Direktzugriffsrichtlinie zu initiieren,
die Bestimmungseinheit (42) dafür konfiguriert ist zu bestimmen, ob der von der Initiierungseinheit (41) initiierte Direktzugriffsvorgang erfolgreich ist, und die eine Auslösungseinheit (43) auszulösen, falls dies nicht der Fall ist, und
die Auslösungseinheit (43) dafür konfiguriert ist, einen Vorgang zur Wiederherstellung der RRC-Verbindung auszulösen, wobei
die Auslösungseinheit (43) dafür konfiguriert ist, den Vorgang zur Wiederherstellung der RRC-Verbindung auszulösen, falls eine MAC-Schicht ein Direktzugriffsproblem einer RRC-Schicht anzeigt und die RRC-Schicht die Anzeige über das Direktzugriffsproblem der RRC-Schicht empfängt, und die RRC-Schicht die Anzeige als Funkverbindungsstreckenausfall beurteilt, wenn sie bestimmt, dass entsprechende Zeitgeber nicht laufen, wobei
die Bestimmungseinheit (42) dafür konfiguriert ist zu bestimmen, dass der Direktzugriffsvorgang fehlgeschlagen ist, wenn die Anzahl von Direktzugriffspräambel-Übertragungsausfällen auf einem Aufwärts-Primärkomponententräger (Uplink Primary Component Carrier, UL PCC) eine voreingestellte maximale Anzahl von Direktzugriffspräambel-Übertragungen erreicht, oder
wenn die Anzahl von Direktzugriffspräambel-Übertragungsausfällen auf jedem Aufwärts-Komponententräger (Uplink Component Carrier, UL CC) die voreingestellte maximale Anzahl von Direktzugriffspräambel-Übertragungen erreicht, und
die Vorrichtung ferner umfasst: eine Einstellungseinheit, die dafür konfiguriert ist, einen Zeitgeber Tx unter einer Bedingung, dass der Direktzugriffsvorgang durch ein Eintreffen von Abwärts-Daten (Downlink-Daten) ausgelöst wird, eines Zeitgebers Ty unter der Bedingung, dass der Direktzugriffsvorgang durch ein Eintreffen von Aufwärts-Daten (Uplink-Daten) ausgelöst wird, und eines Zeitgebers Tz unter einer Bedingung, dass der Direktzugriffsvorgang durch eine Timing-Advance-Bestimmung zum Lokalisieren des UE ausgelöst wird, einzustellen, wobei die Zeitgeber Tx, Ty und Tz gestartet werden, wenn das UE den Direktzugriffsvorgang auf einem UL CC, der zuerst ausgewählt wird, initiiert, wobei die entsprechenden Zeitgeber mindestens einer von Tx. Ty und Tz sind, und
die Bestimmungseinheit (42) dafür konfiguriert ist, vor dem Auslösen des Vorgangs zur Wiederherstellung der RRC-Verbindung durch die Auslösungseinheit (43) zu bestimmen, ob mindestens einer der Zeitgeber Tx, Ty und Tz abläuft, und die Auslösungseinheit (43) dafür konfiguriert ist, dann den Vorgang zur Wiederherstellung der RRC-Verbindung auszulösen, wenn der mindestens eine der Zeitgeber Tx, Ty und Tz abläuft.

## Revendications

1. Procédé de déclenchement de rétablissement de connexion de gestion des ressources radio, RRC, comprenant les étapes ci-dessous consistant à :
indiquer (60), par le biais d'une couche de contrôle d'accès au support, MAC, un problème d'accès aléatoire d'une couche de gestion RRC, lorsqu'il est déterminé qu'une procédure d'accès aléatoire initiée par un équipement d'utilisateur, UE, selon une politique d'accès aléatoire, est défaillante ;
recevoir, par le biais de la couche de gestion RRC, une indication de la couche de contrôle MAC ;
déterminer, par le biais de la couche de gestion RRC, si des temporisateurs correspondants sont en cours d'exécution, et considérer l'indication comme étant une défaillance de liaison radio, RLF, lorsque les temporisateurs correspondants ne sont pas en cours d'exécution ; et
déclencher une procédure de rétablissement de connexion de gestion RRC ;
dans lequel l'étape consistant à déterminer que la procédure d'accès aléatoire est défaillante comporte les étapes ci-dessous consistant à :
déterminer (60) que le nombre d'occurrences de défaillances de transmissions de préambule d'accès aléatoire sur une porteuse composante principale de liaison montante, UL PCC, atteint un nombre maximum prédéfini d'occurrences de transmissions de préambule d'accès aléatoire ; ou
déterminer (50) que le nombre d'occurrences de défaillances de transmissions de préambule d'accès aléatoire sur chaque porteuse composante de liaison montante, UL CC, atteint le nombre maximum prédéfini d'occurrences de transmissions de préambule d'accès aléatoire ; et
dans lequel l'étape consistant à déterminer, par le biais de la couche de gestion RRC, si des temporisateurs correspondants sont en cours d'exécution, comprend l'étape ci-dessous consistant à :
définir un temporisateur Tx sous une condition de la procédure d'accès aléatoire déclenchée par une arrivée de données de liaison descendante, un temporisateur Ty sous une condition de la procédure d'accès aléatoire déclenchée par une arrivée de données de liaison montante, et un temporisateur Tz sous une condition de la procédure d'accès aléatoire déclenchée par une détermination d'avance de temporisation pour localiser l'équipement UE, dans lequel les temporisateurs Tx, Ty et Tz sont démarrés lorsque l'équipement UE initie la procédure d'accès aléatoire sur une porteuse UL CC qui est sélectionnée en premier lieu ; dans lequel les temporisateurs correspondants sont au moins l'un parmi les temporisateurs Tx, Ty et Tz ; et
dans lequel, avant tout déclenchement de la procédure de rétablissement de connexion de gestion RRC, le procédé comprend en outre les étapes ci-après consistant à :
déterminer si au moins l'un des temporisateurs Tx, Ty et Tz arrive à expiration ; et déclencher la procédure de rétablissement de connexion de gestion RRC si au moins l'un des temporisateurs Tx, Ty et Tz arrive à expiration.

2. Procédé selon la revendication 1, comprenant en outre l'étape ci-dessous consistant à :
avant de déterminer (60) que le nombre d'occurrences de défaillances de transmissions de préambule d'accès aléatoire sur la porteuse UL PCC atteint le nombre maximum prédéfini d'occurrences de transmissions de préambule d'accès aléatoire, déterminer (20) que le nombre d'occurrences de défaillances de transmissions de préambule d'accès aléatoire sur une porteuse composante secondaire de liaison montante, UL SCC, atteint le nombre maximum prédéfini d'occurrences de transmissions de préambule d'accès aléatoire.

3. Procédé selon la revendication 1, dans lequel les temporisateurs correspondants comprennent en outre les temporisateurs T301, T311 et T304 ; et
l'étape consistant à déterminer si les temporisateurs correspondants sont en cours d'exécution comprend en outre les étapes ci-dessous consistant à :
déterminer si le temporisateur T301 et/ou le temporisateur T311 est/sont en cours d'exécution sous une condition de la procédure d'accès aléatoire déclenchée par un événement de rétablissement de connexion de gestion RRC ; et déterminer si le temporisateur T304 est en cours d'exécution sous une condition de la procédure d'accès aléatoire déclenchée par un événement de transfert intercellulaire.

4. Dispositif destiné à déclencher un rétablissement de connexion de gestion des ressources radio, RRC, comprenant une unité d'initiation (41), une unité de détermination (42) et une unité de déclenchement (43), dans lequel
l'unité d'initiation (41) est configurée de manière à initier une procédure d'accès aléatoire selon une politique d'accès aléatoire ;
l'unité de détermination (42) est configurée de manière à déterminer si la procédure d'accès aléatoire initiée par l'unité d'initiation (41) a réussi, et à déclencher l'unité de déclenchement (43) dans la négative ; et
l'unité de déclenchement (43) est configurée de manière à déclencher une procédure de rétablissement de connexion de gestion RRC, dans lequel
l'unité de déclenchement (43) est configurée de manière à déclencher la procédure de rétablissement de connexion de gestion RRC dans le cas où une couche de contrôle MAC indique un problème d'accès aléatoire d'une couche de gestion RRC, et la couche de gestion RRC reçoit l'indication du problème d'accès aléatoire de la couche de gestion RRC et la couche de gestion RRC considère l'indication comme étant une défaillance de liaison radio lorsqu'il est déterminé que des temporisateurs correspondants ne sont pas en cours d'exécution ; dans lequel l'unité de détermination (42) est configurée de manière à déterminer que la procédure d'accès aléatoire est défaillante dans le cas où le nombre d'occurrences de défaillances de transmissions de préambule d'accès aléatoire sur une porteuse composante principale de liaison montante, UL PCC, atteint un nombre maximum prédéfini d'occurrences de transmissions de préambule d'accès aléatoire, ou dans le cas où le nombre d'occurrences de défaillances de transmissions de préambule d'accès aléatoire sur chaque porteuse composante de liaison montante, UL CC, atteint le nombre maximum prédéfini d'occurrences de transmissions de préambule d'accès aléatoire ; et
le dispositif comprend en outre : une unité de définition configurée de manière à définir un temporisateur Tx sous une condition de la procédure d'accès aléatoire déclenchée par une arrivée de données de liaison descendante, un temporisateur Ty sous une condition de la procédure d'accès aléatoire déclenchée par une arrivée de données de liaison montante, et un temporisateur Tz sous une condition de la procédure d'accès aléatoire déclenchée par une détermination d'avance de temporisation pour localiser l'équipement UE, dans lequel les temporisateurs Tx, Ty et Tz sont démarrés lorsque l'équipement UE initie la procédure d'accès aléatoire sur une porteuse UL CC qui est sélectionnée en premier lieu ; dans lequel les temporisateurs correspondants sont au moins l'un des temporisateurs Tx, Ty et Tz ; et
avant que l'unité de déclenchement (43) ne déclenche la procédure de rétablissement de connexion de gestion RRC, l'unité de détermination (42) est configurée de manière à déterminer si au moins l'un des temporisateurs Tx, Ty et Tz arrive à expiration, et ensuite l'unité de déclenchement (43) est configurée de manière à déclencher la procédure de rétablissement de connexion de gestion RRC si ledit au moins l'un des temporisateurs Tx, Ty et Tz arrive à expiration.
